# EUROPÄISCHE PATENTSCHRIFT

(11) **EP 2 618 986 B1**
(45) Veröffentlichungstag und Bekanntmachung des Hinweises auf die Patenterteilung: **12.10.2016**
(21) Anmeldenummer: 11852209.3
(22) Anmeldetag: 13.10.2011
(51) Int. Cl.: B29C 49/06, B29C 49/12, B29C 49/48, B29C 49/56, B29D 22/00, B29K 23/00, B29K 67/00

(54) **VERFAHREN UND VORRICHTUNG ZUR BLASFORMUNG VON BEHÄLTERN**
METHOD AND DEVICE FOR BLOW MOULDING CONTAINERS
PROCÉDÉ ET DISPOSITIF DE MOULAGE PAR SOUFFLAGE DE RÉCIPIENTS

(30) Priorität: 13.10.2010 DE 102010048663
(43) Veröffentlichungstag der Anmeldung: 31.07.2013
(73) Patentinhaber: KHS Corpoplast GmbH, 22145 Hamburg (DE)
(72) Erfinder: HAESENDONCKX, Frank, 22047 Hamburg (DE); BÖHNKE, Marco, 22964 Mollhagen (DE); KLATT, Dieter, 22147 Hamburg (DE); BAUMGARTE, Rolf, 22926 Ahrensburg (DE); STRIEBEL, Carlo, 22149 Hamburg (DE); KLÖPPER, Gerhard, 22175 Hamburg (DE); LITZENBERG, Michael, 21502 Geesthacht (DE); LEWIN, Frank, 22889 Tangstedt (DE)
(74) Vertreter: Hausfeld, Norbert
(86) Internationale Anmeldenummer: PCT/DE2011/001859
(87) Internationale Veröffentlichungsnummer: WO 2012/095063

(56) Entgegenhaltungen:
- WO-A1-2007/012308
- WO-A1-2011/026980
- WO-A2-2010/069808

## Beschreibung

Die Erfindung betrifft ein Verfahren zur Blasformung von Behältern, bei dem ein Vorformling nach einer thermischen Konditionierung innerhalb einer Blasform einer Blasstation einer Blasmaschine durch Blasdruckeinwirkung in den Behälter umgeformt wird sowie bei dem zur Anpassung an eine Kontur des herzustellenden Behälters zunächst mindestens ein Teil einer ersten Blasform aus der Blasstation entnommen und durch mindestens einen Teil einer zweiten Blasform ersetzt wird und wobei vor der Entnahme des Teiles der ersten Blasform eine dieses Teil in der Blasstation fixierende Arretierung gelöst und diese Arretierung nach dem Einsetzen des Teiles der zweiten Blasform wieder zur Fixierung des Teiles der zweiten Blasform positioniert wird.
Die Erfindung betrifft darüber hinaus eine Vorrichtung zur Blasformung von Behältern, die mindestens eine Blasstation mit einer Blasform aufweist, sowie bei der die Blasform aus mindestens zwei Teilen besteht, die von mindestens einer Arretierung im Bereich der Blasstation fixierbar sind, wobei die Arretierung mit mindestens einer Betätigungseinrichtung gekoppelt ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hochleistungsblasmaschinen weisen einen erheblichen Ausstoß von Flaschen pro Zeiteinheit auf. Bei entsprechend leistungsfähigen Maschinen kann dieser Ausstoß derzeit bis zu einer Größenordnung von etwa 80.000 Flaschen pro Stunde erreichen.

Bei vielen Anwendungen stellt der Betreiber einer derartigen Blasmaschine unterschiedliche Endprodukte her und benötigt hierfür unterschiedlich geformte geblasene Behälter. Eine sich über mehrere Tage ergebende Gesamtausstoßleistung von Hochleistungsblasmaschinen übersteigt deshalb häufig den konkret vorliegenden Bedarf an einer bestimmten Anzahl von geblasenen Behältern. Die Blasstationen der Blasmaschinen sind deshalb derart konstruiert, dass die Blasformen ganz oder teilweise ausgewechselt werden können. Nach einer entsprechenden Umrüstung kann dann die betreffende Blasmaschine anders geformte oder dimensionierte geblasene Behälter herstellen.

Insbesondere bei großen Blasmaschinen, die häufig eine Anzahl von 20 bis 40 Blasstationen besitzen, die auf einem rotierenden Blasrad angeordnet sind, erweist sich das Austauschen der Blasformen oder von Teilen der Blasformen als arbeitsaufwendig.
Eine typische Konstruktion von Blasstationen erfolgt derart, dass diese zunächst mechanisch relativ stabile äußere Formträger aufweisen, die konstruktionsabhängig gegeneinander verriegelt werden können, oder die unverriegelt eingesetzt werden. In diese äußeren Formenträger werden häufig äußere Formschalen eingesetzt, die relativ universell konstruiert sind und auch bei einem Formwechsel in der Regel nicht ausgetauscht werden. Zusätzlich werden innere Formschalen verwendet, die eine Innenkontur besitzen, die an die herzustellenden Behälter angepasst ist. Diese inneren Formschalen werden dann lösbar im Bereich der äußeren Formschalen fixiert.

Eine typische derartige Konstruktion wird in der EP 0 821 641 A beschrieben. Hier werden die äußeren Formschalen mit den Formträgern verschraubt und in seitlichen Bereichen der äußeren Formschalen sind verschiebliche Laschen angeordnet. Bei einem Austausch der inneren Formschalen werden die Laschen fixierende Schrauben gelöst und die Laschen nach außen verschoben. Es kann dann die jeweilige innere Formschale entnommen und durch eine andere Formschale ersetzt werden. Anschließend werden die Laschen wieder nach innen verschoben und erneut fixiert. Nach einem Öffnen der Blasstation müssen somit im Bereich jeder Blasstation vier Schrauben gelöst, vier Laschen verschoben, anschließend wieder zurück positioniert und abschließend dann erneut die vier Schrauben angezogen werden. Der damit einhergehende Arbeits- und Zeitaufwand ist erheblich und nachteilig, da die Blasmaschine während der Umrüstzeit still steht und keine Behälter produziert werden können.

Eine hinsichtlich der Handhabung deutlich vereinfachte Arretierungsvorrichtung wird in der WO 2007/12308 A1 beschrieben. Hier kann unter Verwendung eines Handhebels eine Arretierung gelöst und wieder fixiert werden, die sowohl einen Formschluss als auch einen Kraftschluss bereitstellt. Bei der Anwendung für eine Konstruktion mit Forminnenschalen und mit Formaußenschalen wird eine komplette Seite der Forminnenschale in einem Arbeitsschritt relativ zur Formaußenschale beziehungsweise relativ zum Formträger gelöst oder wieder fixiert.

Im Hinblick auf die Realisierung möglichst kurzer Produktionsunterbrechungen durch Formwechselvorgänge können die bisher bekannten Verfahren und Vorrichtungen noch nicht alle Anforderungen erfüllen, die an eine Minimierung der Umrüstzeiten gestellt werden.

Aufgabe der vorliegenden Erfindung ist es daher, ein Verfahren der einleitend genannten Art derart zu verbessern, dass eine Reduzierung von Umrüstzeiten bei einem Formwechselvorgang erreicht wird.

Diese Aufgabe wird erfindungsgemäß dadurch gelöst, dass der Formwechselvorgang werkzeuglos erfolgt, indem jede Arretierung mit einem Stellelement gekoppelt wird. Das Lösen und das ein Formteil fixierende Positionieren der Arretierung erfolgt dann mittels dieses gekoppelten Stellelementes, ohne dass es eines Werkzeuges bedarf. Es entfällt dadurch insbesondere das Ansetzen und Absetzen eines Werkzeuges.

Weitere Aufgabe der vorliegenden Erfindung ist es, eine Vorrichtung der einleitend genannten Art derart zu konstruieren, dass verringerte Umrüstzeiten bei einem Formwechselvorgang erreicht werden.

Diese Aufgabe wird erfindungsgemäß dadurch gelöst, dass für ein werkzeugloses Lösen und fixierende Positionieren der Arretierung jede Arretierung mit einem Stellelement gekoppelt ist. Das Lösen und das ein Formteil fixierende Positionieren der Arretierung erfolgt dann mittels dieses gekoppelten Stellelementes, ohne dass es eines Werkzeuges bedarf. Es entfällt dadurch insbesondere das Ansetzen und Absetzen eines Werkzeuges.

Durch die Kopplung jeder verwendeten Arretierung mit einem Stellelement ist es möglich, einen werkzeuglosen Formwechselvorgang zu realisieren. In Abhängigkeit von einer jeweils gewünschten Automatisierungsstufe ist es möglich, alle oder einige der Stellelemente als manuell betätigbare Hebel oder Griffe auszubilden. Bei einer stärker automatisierten Ausführungsform können mindestens einige der Stellelemente als Aktoren realisiert sein, beispielsweise als pneumatisch oder hydraulisch betätigte Zylinder oder als Elektromotoren.

Jeweils konkret zu realisierende Ausführungsformen werden in Abhängigkeit von einer konkret gewünschten Reduzierung der Umrüstzeiten und in Abhängigkeit von einem als vertretbar angesehenen gerätetechnischen Aufwand ausgewählt.

In einer preiswerten Version einer Unterstützung eines werkzeuglosen Formwechsels werden alle Stellelemente als manuell betätigbare Elemente realisiert, bei einer sehr weitgehenden Automatisierung werden eine möglichst große Anzahl der Stellelemente als Aktoren realisiert, die vorzugsweise von einer Steuerung der Maschine aus betätigbar sind. Es können aber auch sowohl manuell betätigbare als auch steuerbare Aktoren gemischt eingesetzt werden.

Eine vorteilhafte Koordinierung der mechanischen Abläufe im Zusammenhang mit einem Lösen der Arretierung erfolgt dadurch, dass die Blasstation vor einem Lösen der Arretierung geöffnet wird.

Eine reproduzierbare und robuste Bewegungsvorgabe kann dadurch erfolgen, dass das Öffnen der Blasstation während einer Drehbewegung des Blasrades durch ein positionierbares Kurvensegment erfolgt.

Zur weiteren Bereitstellung eines erforderlichen Arbeitsraumes wird vorgeschlagen, dass vor einer Entriegelung der Arretierung eine Blasdüse positioniert wird.

Eine zweckmäßige konstruktive Realisierung besteht darin, dass die Positionierung der Blasdüse bei einer Drehbewegung des Blasrades durch ein Kurvensegment durchgeführt wird.

Zur weiteren Anpassung an die herzustellenden Behälter wird vorgeschlagen, dass eine Arretierung einer Bodenform gelöst wird.

Eine weitere Reduktion der erforderlichen Arbeitszeit kann dadurch erfolgen, dass die Bodenform über mindestens eine Kopplung mit mindestens einer Betriebsmittelzuführung verbunden wird.

Eine vereinfachte mechanische Konstruktion wird dadurch bereit gestellt, dass eine Halterung für die Bodenform mechanisch mit Formträgern der Blasstation derart gekoppelt wird, dass eine Bewegungskopplung realisiert ist.

Eine preiswerte Ausführungsform kann dadurch erreicht werden, dass das Stellelement manuell betätigt wird.

Ein erhöhter Automatisierungsgrad wird dadurch unterstützt, dass das Stellelement von einem steuerbaren Aktor betätigt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Blasrades mit einigen montierten Blasstationen sowie einer gesonderten Steuereinrichtung für eine Unterstützung des werkzeuglosen Formwechsels,
- Fig. 6: eine perspektivische Darstellung von äußeren Formschalen mit Aktoren zur Betätigung einer Arretierung zur Fixierung von nicht dargestellten inneren Formschalen,
- Fig. 7: ein manuell betätigbares Arretierungselement zur Fixierung und Freigabe von inneren Formschalen,
- Fig. 8: eine perspektivische Außenansicht einer äußeren Formschale,
- Fig. 9: eine perspektivische Darstellung von äußeren Formschalen mit eingesetzten inneren Formschalen,
- Fig. 10: eine perspektivische Darstellung einer Vorrichtung zur Positionierung einer Bodenform,
- Fig. 11: eine Arretierungsvorrichtung für eine Bodenform, wobei die Arretierungsvorrichtung mit einem Handhebel versehen ist,
- Fig. 12: die Anordnung gemäß Figur 11 nach einem Ersatz des Handhebels durch ein automatisch betätigbares Stellelement,
- Fig. 13: eine perspektivische Darstellung einer Vorrichtung mit einem positionierbaren Kurvensegment zur Anhebung und Absenkung einer Form,
- Fig. 14: eine schematische perspektivische Draufsicht auf die in Figur 5 dargestellte Bedieneinrichtung zur Unterstützung eines werkzeuglosen Formwechsels.

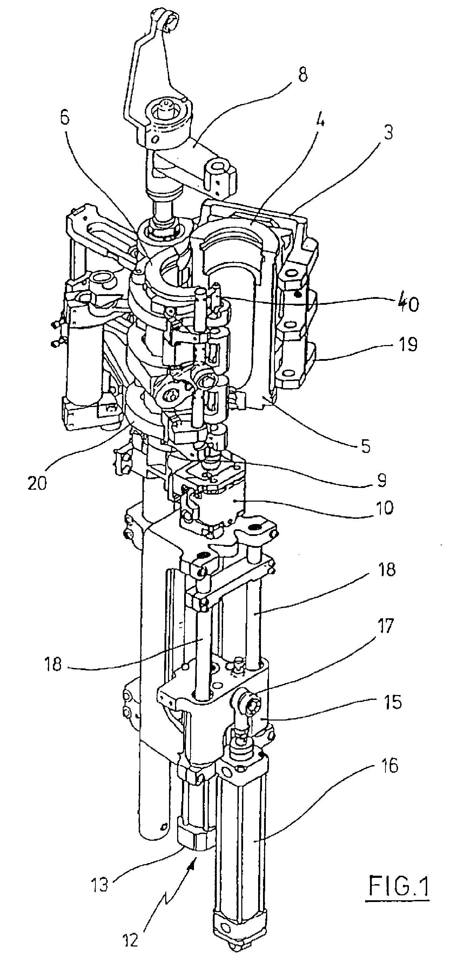

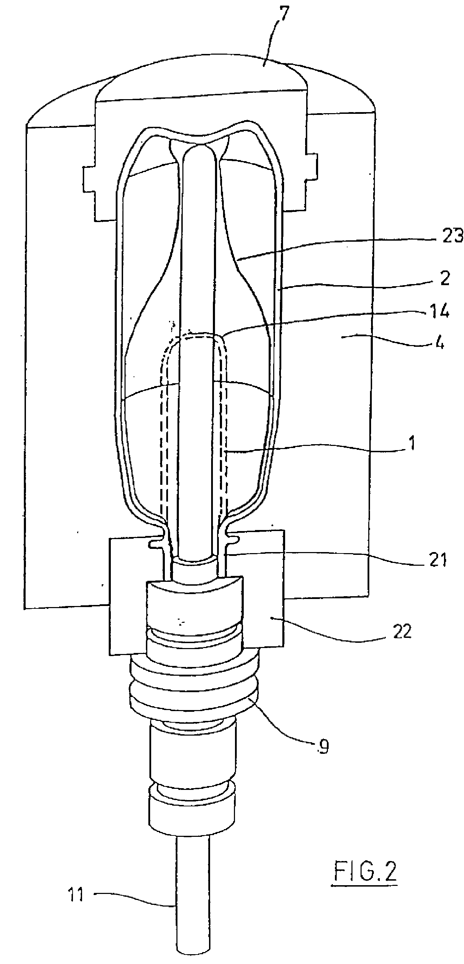

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.
Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schießen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

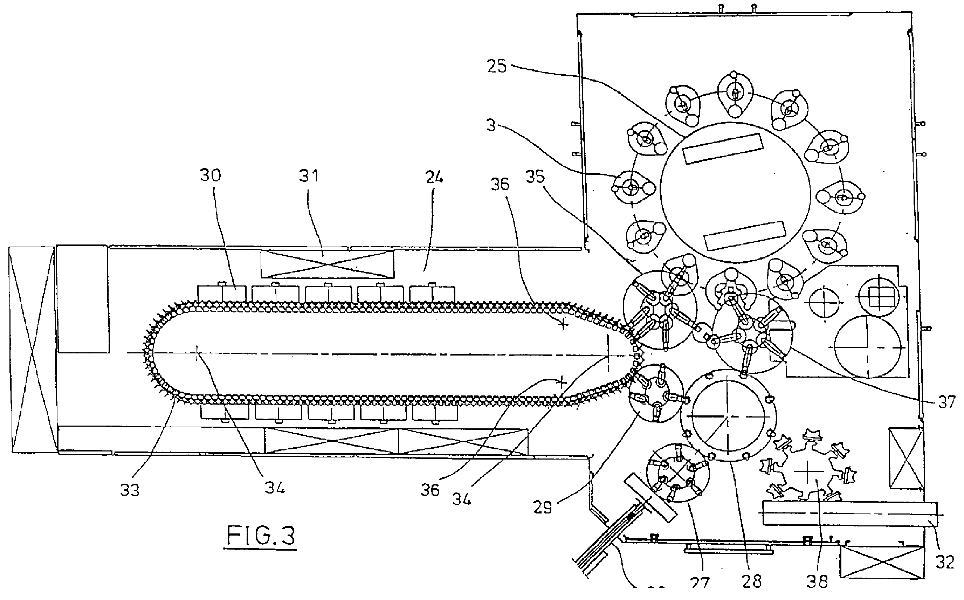

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

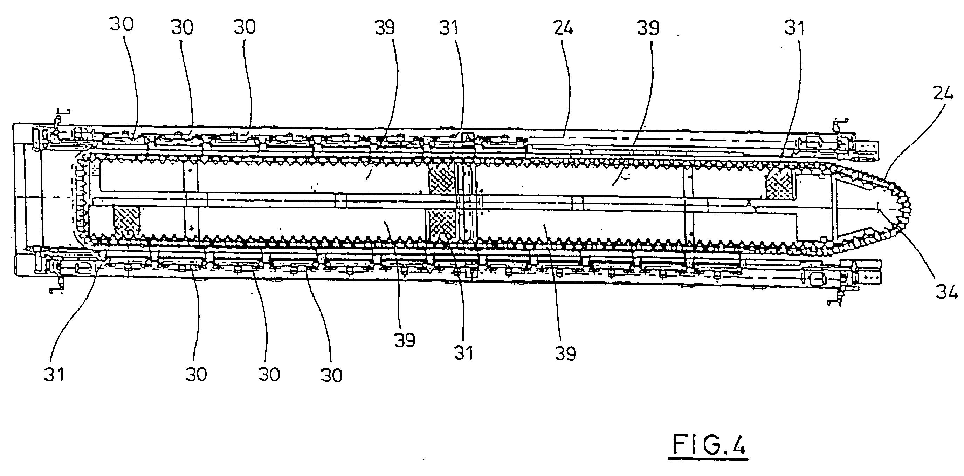

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

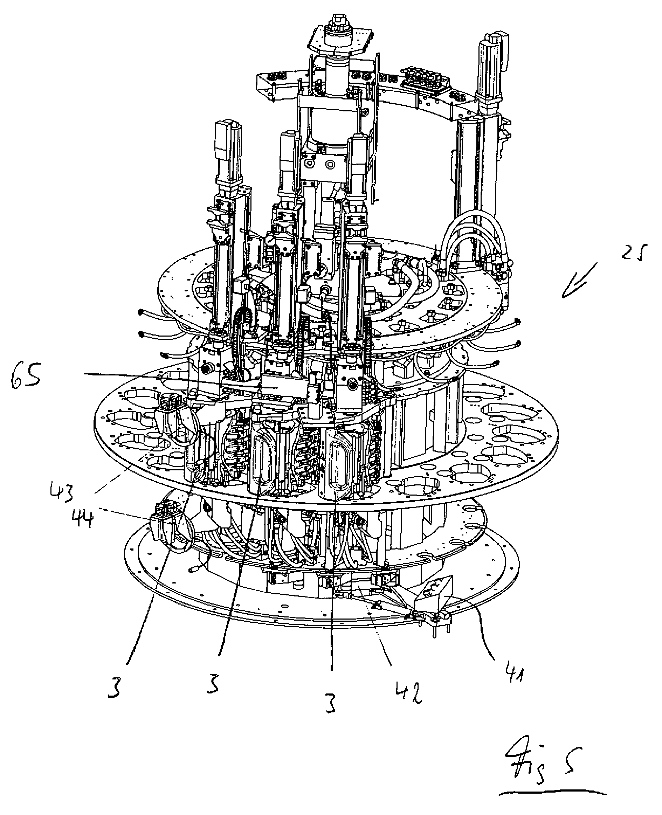

Fig. 5 zeigt eine perspektivische Darstellung des Blasrades (25) mit drei bereits montierten Blasstationen (3). Zu erkennen ist auch eine Bedieneinrichtung (41) für den Start eines Beginns des werkzeuglosen Formwechselns und zur Beendigung dieses Arbeitsvorganges. Darüber hinaus ist ein positionierbares Kurvensegment (42) zu erkennen, dass in einer Arbeitspositionierung dazu dient, ein Öffnen der Blasstation (3) bei einer Rotationsbewegung des Blasrades (25) vorzugeben. Das Kurvensegment (42) kann beispielsweise pneumatisch positionierbar sein. Ebenfalls zeigt Fig. 5 die Anordnung von zwei ID-Einheiten (43, 44). Die Einheiten (43, 44) können beispielsweise dazu dienen, die Blasform (4) beziehungsweise Teile der Blasform (4) zu identifizieren und entsprechende Informationen an die Maschinensteuerung zu übertragen. Die Identifizierung kann beispielsweise durch mechanische Codierungen, durch Transponder oder andere beispielsweise elektronisch oder optisch erfassbare Identifizierungselemente erfolgen.

Die Identifizierung kann beispielsweise dazu dienen, die Zusammengehörigkeit der einzelnen Formteile zu überprüfen und/oder zu überprüfen, ob die Formteile zu einer über die Maschinensteuerung ausgewählten Produktionsvariante korrespondieren.

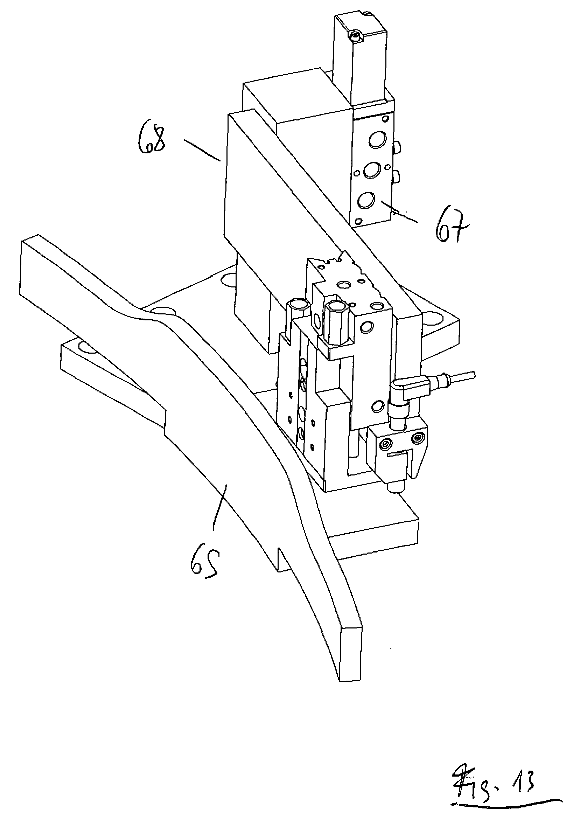

Eingezeichnet in Fig. 5 ist ebenfalls ein positionierbares Kurvensegment (65), das dazu dient, eine Blasdüse relativ zur Blasform (4) zu positionieren. Das betreffende Kurvensegment (65) ist im Zusammenhang mit Fig. 13 noch näher erläutert.

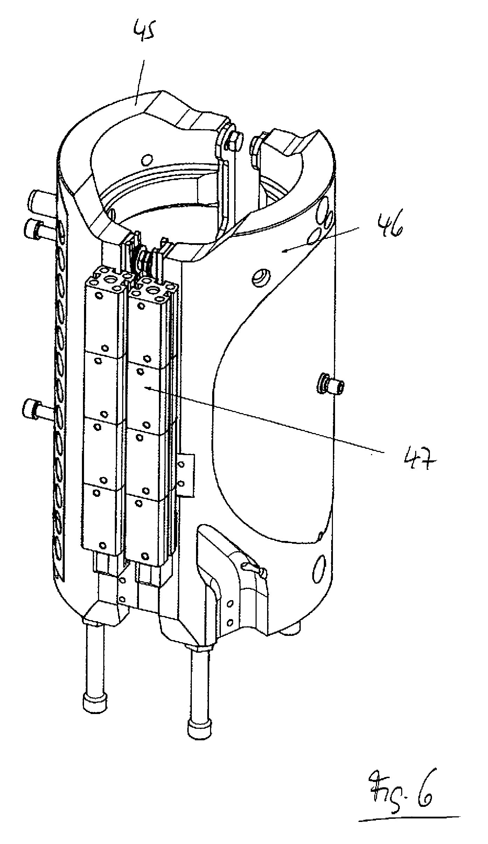

Fig. 6 zeigt eine perspektivische Darstellung von zwei äußeren Formschalen, die für eine Montage im Bereich der Träger (19, 20) vorgesehen sind. Seitlich an den äußeren Formschalen (45, 46) sind ein oder mehrere Stellelemente (47) angeordnet. Die Stellelemente (47) können als Pneumatikzylinder ausgebildet sein und dienen zu einer Positionierung eines in Fig. 6 nicht dargestellten Arretierungselementes zur Fixierung von ebenfalls nicht dargestellten inneren Formschalen relativ zu den äußeren Formschalen (45, 46).

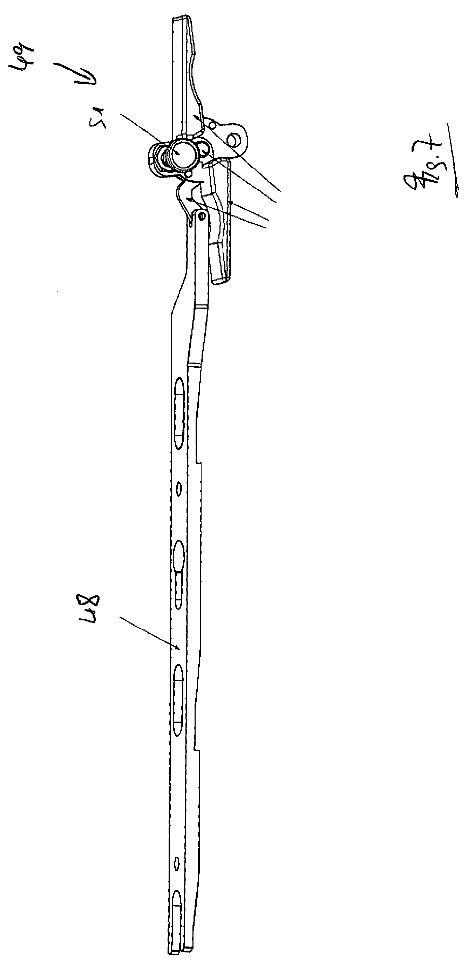

Fig. 7 zeigt eine perspektivische Darstellung eines Arretierungselementes (48) zur Fixierung der inneren Formschalen. Das Arretierungselement ist hier mit einem Stellelement gekoppelt, dass als ein Handhebel (49) ausgebildet ist. Der Handhebel ist hier als ein Kipphebel ausgebildet, der manuell das Arretierungselement (48) in einer Längsrichtung (50) positioniert und hierdurch eine Fixierung der inneren Formschalen vornimmt beziehungsweise diese wieder frei gibt.
Der Handhebel (49) ist beim dargestellten Ausführungsbeispiel als ein Kniehebel ausgeführt, der einen Rastbolzen (51) aufweist.

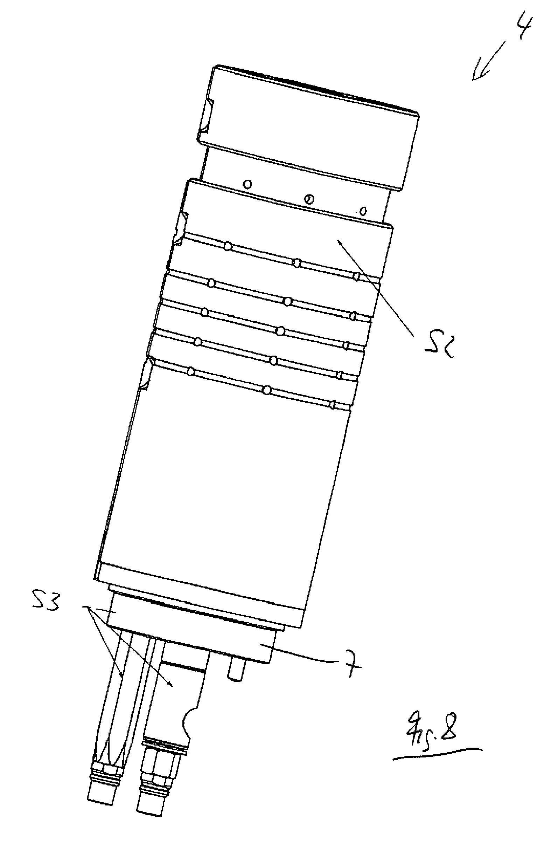

Fig. 8 zeigt eine äußere perspektivische Darstellung einer inneren Formschale (52). Zu erkennen ist ebenfalls ein Bodenteil (7) der Blasform (4), das mit einer Mehrfachkupplung (53) versehen ist. Die Mehrfachkupplung (53) dient zur Zufuhr mindestens eines Kühl- oder Heizmediums zum Bodenteil (57).

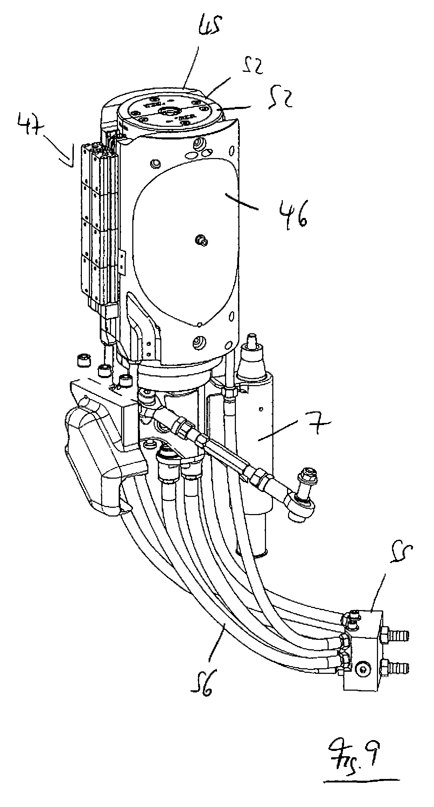

Fig. 9 zeigt eine perspektivische Darstellung von zwei äußeren Formschalen (45, 46) mit zwei zugeordneten inneren Formschalen (52). Zu erkennen sind wieder Stellelemente (47).

Zur Durchführung einer Positionierung des Bodenteiles (7) ist eine Hebevorrichtung (54) vorgesehen.

Darüber hinaus ist ein Verteilerblock (55) für Kaltwasser und eine Verschlauchung (56) für die Blasstation (3) zu erkennen.

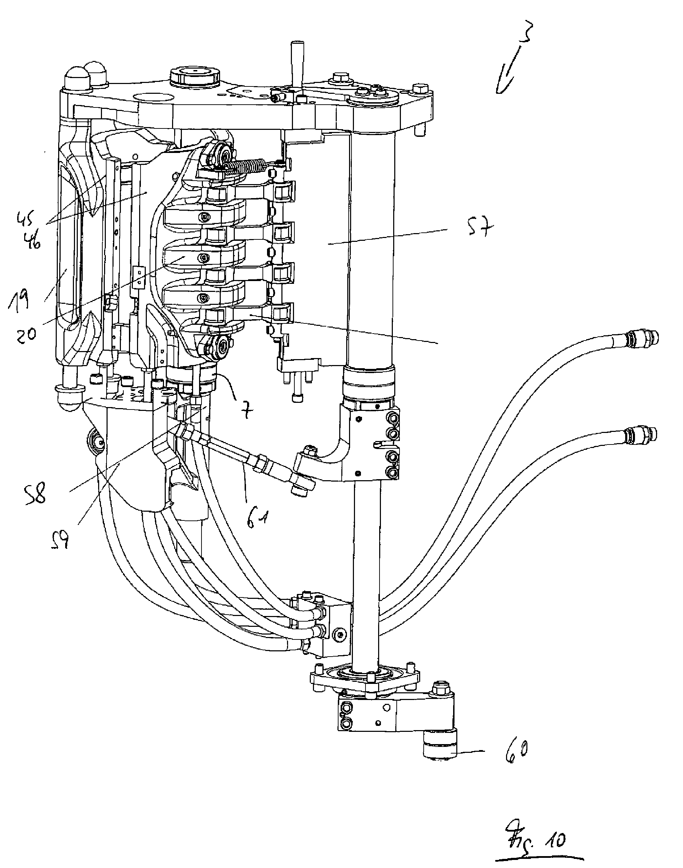

Fig. 10 veranschaulicht die Konstruktion einer Blasstation (3), bei der ein Öffnen und Schießen der Blasstation (3) unter Verwendung eines Kniehebels durchgeführt wird. Zu erkennen sind auch die Formträger (19, 20) sowie die äußeren Formschalen (45, 46).

Zur Durchführung einer Positionierung des Bodenteiles (7) wird ein Schlitten (58) verwendet. Eine Positionierung des Schlittens (58) erfolgt unter Verwendung einer Kurve (59).

Eine Öffnungs- und Schließbewegung der Blasstation (3) erfolgt unter Verwendung einer Kurvenrolle (60). Eine Kopplung der Bewegung der Bodenform (7) und einer Öffnungsbewegung der Träger (19, 20) erfolgt unter Verwendung eines Kopplungshebels (61).

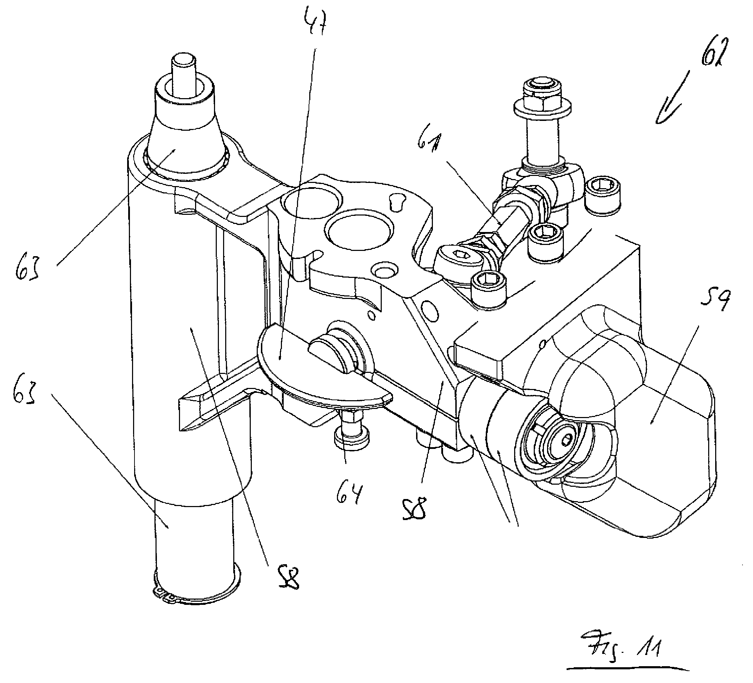

Fig. 11 zeigt eine werkzeuglos zu lösende und zu fixierende Arretierung für die Bodenform (7). Ein Stellelement (47) ist hier als ein manuell betätigbarer Handhebel ausgebildet. Zu erkennen sind ebenfalls der Schlitten (58) und eine Achse (63) für die Positionierung der Bodenform (7). Zur Vorgabe der Beibehaltung eines gewählten arretierten oder gelösten Zustandes wird ein Rastbolzen (64) eingesetzt.

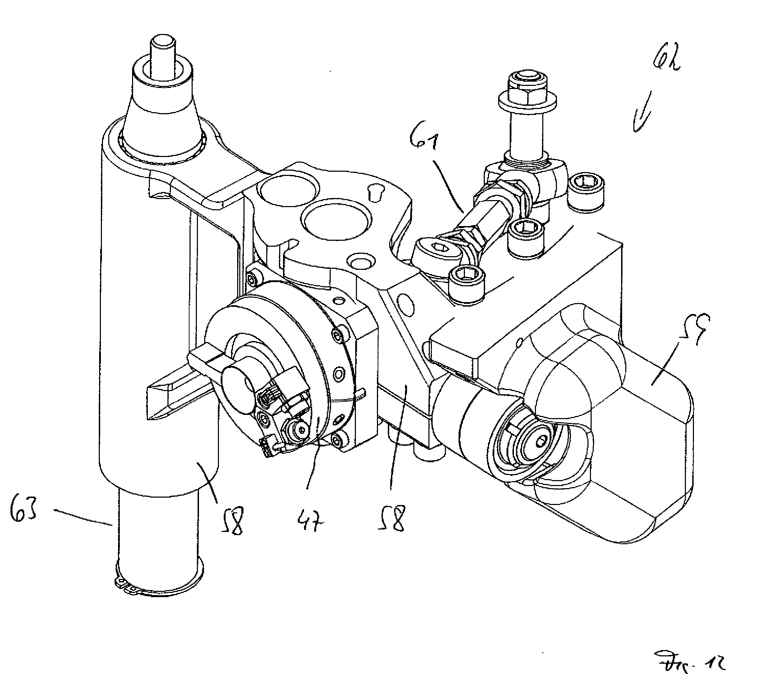

Fig. 12 zeigt eine Abwandlung zur Ausführungsform in Fig. 11. Gemäß der Ausführungsform in Fig. 12 ist das Stellelement (47) als ein pneumatischer Schwenkzylinder ausgebildet. Vorzugsweise als ein Schwenkzylinder mit Endlagenschalter.

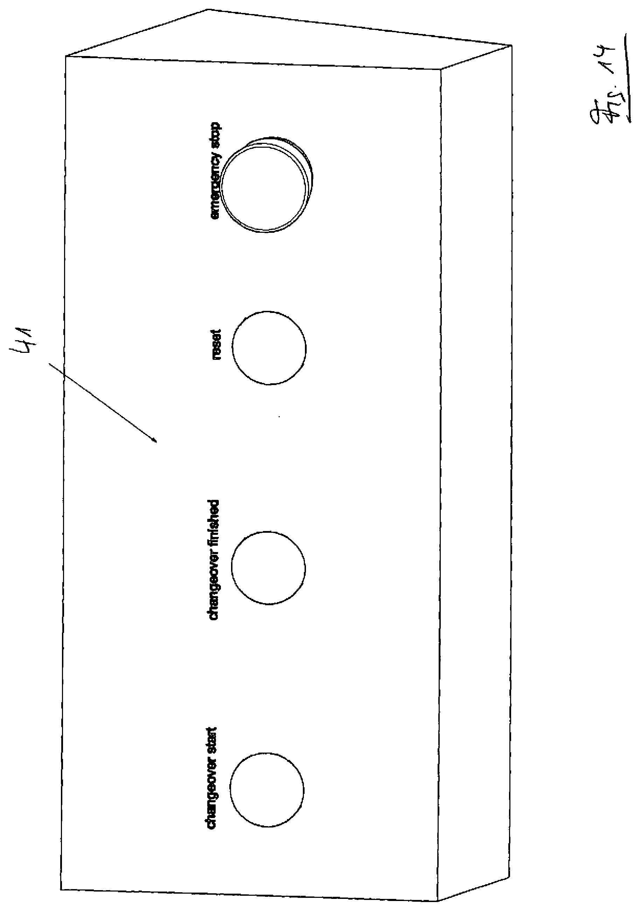

Fig. 13 zeigt ein Kurvensegment (65) zur Positionierung einer Blasdüse. Das Kurvensegment (65) ist von einem Stellelement (66) positionierbar. Das Stellelement (66) kann eine manuelle Stellvorrichtung sein, beim dargestellten Ausführungsbeispiel ist eine pneumatische Verstellung verwendet, die über ein Ventil (67) gesteuert wird. Das Ventil (67) sowie das pneumatische Stellelement (66) werden von einem Halter (68) geeignet positioniert. Fig. 14 zeigt die Bedieneinrichtung (41) mit vier Bedientasten. Eine Bedientaste ist für einen Start des Wechselvorganges und eine weitere Bedientaste zur Beendigung des Wechselvorganges vorgesehen. Darüber hinaus gibt es einen Bedienknopf zur Durchführung eines Rücksetzvorganges und für einen Notaus.

Ein typischer Austausch von Teilen der Blasform (4) oder der kompletten Blasform (4) erfolgt derart, dass zumindest an einer vorgesehenen Arbeitsposition ein Zugang für einen Bediener zum Blasrad (25) geschaffen wird, beispielsweise durch das Öffnen einer Tür einer Maschinenverkleidung. Anschließend wird das Kurvensegment zum Öffnen der Blasstation (39) manuell oder automatisch derart positioniert, dass bei einer Drehung des Blasrades (25) die Blasstation (3) im Bereich der Arbeitspositionierung des Bedieners geöffnet wird. Typischerweise parallel zum Öffnen der Blasstation (3) erfolgt eine Positionierung der Bodenform (7), beispielsweise durch eine mechanische Kopplung mit der Öffnungsbewegung der Blasstation (3).

Zeitlich parallel zur Positionierung des Kurvensegmentes der Blasstation (3) wird auch das Kurvensegment (65) zur Positionierung der Blasdüse geeignet angeordnet. Das Blasrad (25) wird dann vorzugsweise getaktet derart vorwärts bewegt, dass nacheinander die einzelnen Blasstationen geöffnet im Bereich des Bedieners positioniert werden. Bei der Durchführung von manuellen Entriegelungen kann der Bediener dann die manuellen Arretierungselemente betätigen, bei einer automatischen Entriegelung erfolgt jeweils gesteuert, beispielsweise über pneumatische Zylinder, hydraulische Zylinder oder elektrische Motoren, eine Entriegelung der zu entnehmenden Teile der Blasform (4). Der Bediener kann dann das betreffende Teil der Blasform (4) entnehmen und durch ein vorgesehenes anderes Teil ersetzen. Die beschriebenen Vorgänge verlaufen nach dem Einsetzen des neuen Blasformteiles in umgekehrter Reihenfolge.

Gemäß einem Ausführungsbeispiel werden die einzelnen Handhabungsvorgänge des Bedieners optisch durch eine Anstrahlung der zu betätigenden Elemente unterstützt. Beispielsweise mit einem sogenannten Laserpointer oder mit einem Lichtspot.

## Patentansprüche

1. Verfahren zur Blasformung von Behältern (2), bei dem ein Vorformling (1) nach einer thermischen Konditionierung innerhalb einer Blasform (4) einer Blasstation (3) einer Blasmaschine durch Blasdruckeinwirkung in den Behälter (2) umgeformt wird sowie bei dem zur Anpassung an eine Kontur des herzustellenden Behälters (2) zunächst mindestens ein Teil einer ersten Blasform (4) aus der Blasstation (3) entnommen und durch mindestens ein Teil einer zweiten Blasform (4) ersetzt wird und wobei vor der Entnahme des Teiles der ersten Blasform (4) eine diesen Teil der Blasform (4) fixierende Arretierung (48) gelöst und diese Arretierung (48) nach dem Einsetzen des Teiles der zweiten Blasform (4) wieder zur Fixierung des Teiles der zweiten der Blasform (4) positioniert wird, **dadurch gekennzeichnet, dass** die fixierende Arretierung (48) werkzeuglos gelöst und zur Fixierung werkzeuglos positioniert wird, indem jede Arretierung (48) mit einem Stellelement (47, 49) gekoppelt wird und das Lösen und das Positionieren der Arretierung (48) mittels des Stellelementes (47, 49) erfolgt.

2. Verfahren nach Anspruch 1, **dadurch gekennzeichnet, dass** die Blasstation (3) vor einem Lösen der Arretierung (48) geöffnet wird.

3. Verfahren nach Anspruch 1 oder 2 , **dadurch gekennzeichnet, dass** das Öffnen der Blasstation (3) während einer Drehbewegung des Blasrades (25) durch ein positionierbares Kurvensegment (42) erfolgt.

4. Verfahren nach einem der Ansprüche 1 bis 3, **dadurch gekennzeichnet, dass** vor einer Entriegelung der Arretierung (48) eine Blasdüse positioniert wird.

5. Verfahren nach Anspruch 4, **dadurch gekennzeichnet, dass** die Positionierung der Blasdüse bei einer Drehbewegung des Blasrades (25) durch ein Kurvensegment (65) durchgeführt wird.

6. Verfahren nach einem der Ansprüche 1 bis 5, **dadurch gekennzeichnet, dass** eine Arretierung einer Bodenform (7) gelöst wird.

7. Verfahren nach Anspruch 6, **dadurch gekennzeichnet, dass** die Bodenform (7) über mindestens eine Kopplung (55) mit mindestens einer Betriebsmittelzuführung (56) verbunden wird.

8. Verfahren nach einem der Ansprüche 1 bis 7, **dadurch gekennzeichnet, dass** eine Halterung für die Bodenform (7) mechanisch mit Formträgern (19, 20) der Blasstation (3) derart gekoppelt wird, dass eine Bewegungskopplung realisiert ist.

9. Verfahren nach einem der Ansprüche 1 bis 8, **dadurch gekennzeichnet, dass** das Stellelement (49) manuell betätigt wird.

10. Verfahren nach einem der Ansprüche 1 bis 8, **dadurch gekennzeichnet, dass** das Stellelement (47) von einem steuerbaren Aktor betätigt wird.

11. Vorrichtung zur Blasformung von Behältern (2), die mindestens eine Blasstation (3) mit einer Blasform (4) aufweist, sowie bei der die Blasform (4) aus mindestens zwei Teilen besteht, die von mindestens einer Arretierung (48) im Bereich der Blasstation (3) fixierbar sind, wobei die Arretierung (48) mit mindestens einer Betätigungseinrichtung (47, 49) gekoppelt ist, **dadurch gekennzeichnet, dass** für ein werkzeugloses Lösen und fixierendes Positionieren der Arretierung (48) jede Arretierung (48) mit einem Stellelement (47, 49) gekoppelt ist.

12. Vorrichtung nach Anspruch 11, **dadurch gekennzeichnet, dass** benachbart zum Blasrad (25) sich ein positionierbares Kurvensegment (42) zur Vorgabe einer Öffnung der Blasstation (3) angeordnet ist.

13. Vorrichtung nach einem der Ansprüche 11 oder 12, **dadurch gekennzeichnet, dass** benachbart zum Blasrad (25) ein Kurvensegment (65) zur Vorgabe einer Positionierung einer Blasdüse angeordnet ist.

14. Vorrichtung nach einem der Ansprüche 11 bis 13, **dadurch gekennzeichnet, dass** die Bodenform (7) mindestens eine Kopplung (55) zur Verbindung mit einer Betriebsmittelzuführung (56) aufweist.

15. Vorrichtung nach einem der Ansprüche 11 bis 14, **dadurch gekennzeichnet, dass** ein Träger der Bodenform (7) mechanisch mit Trägern (19, 20) der Blasform (4) gekoppelt ist.

## Claims

1. A method for blow moulding containers (2), in the case of which a preform (1) is shaped into the container (2) after a thermal conditioning inside a blow mould (4) of a blowing station (3) of a blowing machine by means of the impact of blowing pressure, and in the case of which at least a part of a first blow mould (4) is initially removed from the blowing station (3) for adaptation to a contour of the container (2), which is to be produced, and is replaced by at least a part of a second blow mould (4), and wherein a detent (48), which fixes this part of the blow mould (4), is released prior to the removal of said part of the first blow mould (4), and this detent (48) is positioned again to fix the part of the second blow mould (4) after the insertion of the part of the second blow mould (4),
**characterised in that**
the fixing detent (48) is released in a tool-free manner and is positioned in a tool-free manner for the fixation, **in that** each detent (48) is coupled to a positioning element (47, 49), and the release and the positioning of the detent (48) takes place by means of the positioning element (47, 49).

2. The method according to claim 1, **characterised in that** the blowing station (3) is opened prior to a release of the detent (48).

3. The method according to claim 1 or 2, **characterised in that** the opening of the blowing station (3) takes place during a rotational movement of the blowing wheel (25) by means of a positionable curve segment (42).

4. The method according to any one of claims 1 to 3, **characterised in that** a blowing nozzle is positioned prior to an unlocking of the detent (48).

5. The method according to claim 4, **characterised in that** the positioning of the blow nozzle is carried out by means of a curve segment (65) in response to a rotational movement of the blowing wheel (25).

6. The method according to any one of claims 1 to 5, **characterised in that** a detent of a base mould (7) is released.

7. The method according to claim 6, **characterised in that** the base mould (7) is connected to at least one operating means supply (56) via at least one coupler (55).

8. The method according to any one of claims 1 to 7, **characterised in that** a holder for the base mould (7) is coupled mechanically to mould carriers (19, 20) of the blowing station (3) such that a motion coupling is realized.

9. The method according to any one of claims 1 to 8, **characterised in that** the positioning element (49) is operated manually.

10. The method according to any one of claims 1 to 8, **characterised in that** the positioning element (47) is operated by a controllable actuator.

11. A device for blow moulding containers (2), which has at least one blowing station (3) comprising a blow mould (4), and in the case of which the blow mould (4) consists of at least two parts, which can be fixed by at least one detent (48) in the area of the blowing station (3), wherein the detent (48) is coupled to at least one operating device (47, 49), **characterised in that** every detent (48) is coupled to a positioning element (47, 49) for a tool-free release and fixing positioning of the detent (48).

12. The device according to claim 11, **characterised in that** a positional curve segment (42) for providing an opening of the blowing station (3) is arranged adjacent to the blowing wheel (25).

13. The device according to any one of claims 11 or 12, **characterised in that** a curve segment (65) for providing a positioning of a blowing nozzle is arranged adjacent to the blowing wheel (25).

14. The device according to any one of claims 11 to 13, **characterised in that** the base mould (7) has at least one coupler (55) for connection to an operating means supply (56).

15. The device according to any one of claims 11 to 14, **characterised in that** a carrier of the base mould (7) is coupled mechanically to carriers (19, 20) of the blow mould (4).

## Revendications

1. Procédé de moulage par soufflage de récipients (2) dans le cadre duquel une préforme (1), après un conditionnement thermique à l'intérieur d'un moule de soufflage (4) d'une station de soufflage (3) d'une machine de moulage par soufflage, est transformée en un récipient (2) sous l'action d'une pression de soufflage, et dans le cadre duquel, en vue d'une adaptation à un contour du récipient (2) à produire, une partie au moins d'un premier moule de soufflage (4) est d'abord retirée de la station de soufflage (3) et remplacée par une partie au moins d'un second moule de soufflage (4), un dispositif de blocage (48) qui fixe la partie du premier moule de soufflage (4) étant desserré avant de retirer cette partie du premier moule de soufflage (4), ce dispositif de blocage (48) étant à nouveau positionné après la mise en place de la partie du second moule de soufflage (4) pour fixer la partie du second moule de soufflage (4), **caractérisé en ce que** le dispositif de blocage (48) servant de fixation peut être desserré sans outil et, pour la fixation, positionné sans outil, chaque dispositif de blocage (48) étant couplé à un actionneur (47, 49) et le desserrage et le positionnement du dispositif de blocage (48) ayant lieu au moyen de l'actionneur (47, 49).

2. Procédé selon la revendication 1, **caractérisé en ce que** la station de soufflage (3) est ouverte avant le desserrage du dispositif de blocage (48).

3. Procédé selon la revendication 1 ou 2, **caractérisée en ce que** l'ouverture de la station de soufflage (3) a lieu pendant un mouvement de rotation de la roue de soufflage (25) et est assurée par un segment de came (42) pouvant être positionné.

4. Procédé selon l'une des revendications 1 à 3, **caractérisé en ce qu'**une buse de soufflage est positionnée avant le déverrouillage du dispositif de blocage (48).

5. Procédé selon la revendication 4, **caractérisé en ce que** le positionnement de la buse de soufflage lors d'un mouvement de rotation de la roue de soufflage (25) est assuré par un segment de came (65).

6. Procédé selon l'une des revendications 1 à 5, **caractérisé en ce qu'**un dispositif de blocage d'une pièce de moulage du fond (7) est desserré.

7. Procédé selon la revendication 6, **caractérisé en ce que** la pièce de moulage du fond (7) est branchée sur au moins une alimentation (56) en agents de production par l'intermédiaire d'au moins un raccordement (55).

8. Procédé selon l'une des revendications 1 à 7, **caractérisé en ce qu'**une fixation pour la pièce de moulage du fond (7) est mécaniquement accouplée à des supports de moule (19, 20) de la station de soufflage (3) de façon à réaliser un couplage cinématique.

9. Procédé selon l'une des revendications 1 à 8, **caractérisé en ce que** l'actionneur (49) est actionné manuellement.

10. Procédé selon l'une des revendications 1 à 8, **caractérisé en ce que** l'actionneur (47) est actionné par un acteur réglable.

11. Dispositif de moulage par soufflage de récipients (2) présentant au moins une station de soufflage (3) avec un moule de soufflage (4), et dont le moule de soufflage (4) est constitué d'au moins deux parties, lesquelles peuvent être fixées par au moins un dispositif de blocage (48) au niveau de la station de soufflage (3), le dispositif de blocage (48) étant couplé à au moins un dispositif d'actionnement (47, 49), **caractérisé en ce que** chaque dispositif de blocage (48) est couplé à un actionneur (47, 49) pour permettre un desserrage sans outil et un positionnement fixant sans outil du dispositif de blocage (48) .

12. Dispositif selon la revendication 11, **caractérisé en ce qu'**est agencé au voisinage de la roue de soufflage (25) un segment de came (42) pouvant être positionné de façon à régler une ouverture de la station de soufflage (3).

13. Dispositif selon l'une des revendications 11 ou 12, **caractérisé en ce qu'**est agencé au voisinage de la roue de soufflage (25) un segment de came (65) pour régler un positionnement d'une buse de soufflage.

14. Dispositif selon l'une des revendications 11 à 13, **caractérisé en ce que** la pièce de moulage du fond (7) présente au moins un raccordement (55) pour le branchement sur une alimentation (56) en agents de production.

15. Dispositif selon l'une des revendications 11 à 14, **caractérisé en ce qu'**un support de la pièce de moulage du fond (7) est mécaniquement accouplé à des supports (19, 20) du moule de soufflage (4).
